# EUROPEAN PATENT APPLICATION

(11) **EP 3 670 985 A1**
(43) Date of publication of application: **24.06.2020**
(21) Application number: 18213241.5
(22) Date of filing: 17.12.2018
(51) Int. Cl.: F16L 3/10, B60R 16/02, F16B 2/14

(54) **RETAINER, SYSTEM**

(71) Applicant: HellermannTyton GmbH, 25436 Tornesch (DE)
(72) Inventor: RUEBEL, Roman, 22926 Ahrensburg (DE)
(74) Representative: Manitz Finsterwald Patent- und Rechtsanwaltspartnerschaft mbB

(57) **Abstract**

The present invention relates to a retainer (10), in particular a self-locking retainer, the retainer comprising a base (12) and a cover (14) that can be moved relative to the base between an open position and a locked position, with a reception space (16) for components being formed between the base (12) and the cover (14) in the locked position, wherein the base (12) comprises a recess (18) at an inner sidewall (20) of the base (12) and the cover (14) comprises a projection (22) that is received in the recess (18) in the locked position, wherein part of the projection (22) forms part of the reception space (16) in the locked position and wherein the projection (22) is configured to be moveable in the recess (18) in the locked position. The invention further relates to a system comprising a such a retainer and a component.

## Description

The present invention relates to a retainer, in particular a self-locking retainer, the retainer comprising a base and a cover that can be moved relative to the base between an open position and a locked position, with a reception space for components being formed between the base and the cover in the locked position. The invention further relates to a system comprising a retainer and a component.

In order to connect components, such as cables, wires, pipes, cable harnesses, ducts etc. to further components, such as the chassis of a car, a wall etc., retainers are used. Moreover, to ensure that the position of the component relative to the further component does not change over time, comparatively high assembly forces typically only achievable through the use of tools are exerted on the retainer during the assembly of the retainer.

Nevertheless aging of the respective components, i.e. of the retainer or of the component to be stored in the retainer, particularly if one of these comprises plastic, can lead to a reduction of the force exerted by the retainer on the component stored therein over time. Moreover, if plastic retainers are used in comparatively warm environments, e.g. in an engine bay, the aging effects can be accelerated. Hence, the position of the component stored in the retainer may change over time which is undesirable.

The use of cable ties, as retainers also produces a comparatively large amount of waste material, as the unused band is typically cut off.

For this reason it is an object of the present invention to provide a retainer which is less susceptible to aging effects and that can ensure the correct positioning of a component in a retainer for a longer period of time. It is a further object of the invention to reduce the assembly forces typically required to fix the component in the retainer. It is yet a further object of the present invention to make available a retainer that can be produced in a more facile manner. It is yet a further object of the invention to make available a retainer which produces less waste material on clamping a component therein.

This object is satisfied by a retainer and by a system having the features of the respective independent claim.

Such a retainer, in particular a self-locking retainer, comprises a base and a cover that can be moved relative to the base between an open position and a locked position, with a reception space for components being formed between the base and the cover in the locked position, wherein the base comprises a recess at an inner sidewall of the base and the cover comprises a projection that is received in the recess in the locked position, wherein part of the projection forms part of the reception space in the locked position and wherein the projection is configured to be moveable in the recess in the locked position.

In this way a retainer is formed by means of which a linear movement of the component stored in the retainer can be counteracted by an increase in the interference experienced between the projection that is moveable in the recess and the recess in the locked position. This means that if the component wants to move in one direction the movement of the projection in the retainer is able to counteract this movement so that the component maintains its position in the retainer.

In this way a relaxation and aging of material of the retainer or of the component, particularly if it is plastic, especially when this is subjected to heat, can be compensated. Moreover, geometrical deviations, i.e. of diameter of the component stored in the retainer can also be compensated.

Moreover, since in comparison to the use of cable ties, double sided tapes, no bands or protective covers are removed as waste material, the use of the retainers can be more environmentally friendly than cable ties or the use of double sided tape.

Further advantageous developments of the invention are described in the following and in the dependent claims.

The projection may be of two-part design with a material of the first part being softer than a material of the second part, preferably with the first part being configured to directly contact the component when the component is arranged within the retainer. By selecting the first part softer than the second part one can ensure that the friction between the projection and the component is greater than the friction between the projection and the base. In this way one can enhance the effect of the projection interacting with the recess to counteract the movement of the component in the retainer to store the component at the pre-defined position for longer periods of time.

The first part may be configured to contact the component in the locked position and the second part is configured to contact the recess in the locked position. In this way one can adapt each specific part of the projection to its specific use. For example, the second part may be configured to be moveable relative to the sidewall in the recess in the locked position.

The second part may have a back wall that is configured to contact said recess and that is shaped complementary to said sidewall. By forming part of the projection complementary to the shape of the recess an interaction between the recess and the projection is facilitated so that one can further increase the retention force between the component and the retainer further ensuring the correct positioning over time within the retainer.

In order to facilitate the interaction between the projection and the component to be stored in the retainer, the projection may have one or more planar surfaces that project into the reception space in the locked position. Such planar surfaces are also comparatively simple to manufacture.

The base may comprise two openings at opposing sides, preferably wherein the openings may have a U-shaped or V-shaped cross-section. In this way a component can be guided through the retainer in a simple manner. Moreover, U-shaped as well as V-shaped openings can be produced in a comparatively simple manner.

The recess may extend from a top side to a bottom side of the base. In this way a complete side of the retainer can be formed to be able to interact with the projection in order to enhance the contact area and contact force between the projection and the component stored within the retainer.

A valley of the recess may be inclined with respect to the bottom side of the base. By forming the recess such that it is inclined with respect to the bottom side of the base further facilitates the interaction between the base and the coved, more specifically between the projection and the recess.

The recess may have one of a U-shaped or V-shaped shape at least in a cross-section in a plane extending in parallel to the bottom side. Such shapes aid in increasing the contact force between the retainer and the component and hence in maintaining the predefined position of the component within the retainer. Moreover, U-shaped as well as V-shaped openings can be produced in a comparatively simple manner.

One or more lugs may be provided at a side of the base disposed opposite to the recess, with the lugs projecting into the reception space, preferably with the lugs being able to be arranged at the top side. The lugs, on the one hand, aid in avoiding the component from exiting the retainer on closing the cover relative to the base as they can prevent the component from escaping upwardly. On the other hand, the lugs also aid in increasing a contact force between the component and the retainer to maintain the predefined position of the component within the retainer for a longer period of time than was previously possible.

At least one of the cover and the base may be configured to be coupled to a further component, preferably wherein at least one of the base and the cover may comprise a connector portion at an outer side thereof.

The cover may be pivotable about a pivot axis relative to the base between the open position and the locked position, preferably wherein one of the cover and the base may comprise an axle that may be received in one or more sleeves arranged at the other one of the cover and the base. In this way one can ensure a leaverage effect is present on assembly of the component in the retainer. This, on the one hand, facilitates a more simple assembly of the component within the retainer and, on the other hand, ensures a high contact force between the projection and the component which is necessary to store the component in the retainer over longer periods of time than was previously possible, while maintaining the initial position of the component in the retainer.

The cover may be locked at the base by means of a snap fit connection, with one of the base and the cover being able to comprise a nose cooperating with a recess provided at the other one of the base and the cover. A snap fit connection is a secure and easy to form type of connection.

Moreover, the use of a snap fit connection means that no double sided tape or cable ties are used and hence that the amount of waste material associated with the use of the retainers is considerably reduced in comparison to such applications.

According to a further aspect the present invention relates to a system comprising a retainer and a component received in the reception space of the retainer, wherein the component is e.g. one of a wire, a cable, a cable harness, a duct, a hose, and a pipe, wherein the component is retained in a self-locking manner in the reception space by means of an interaction between the component, the recess and the projection.

The advantages discussed in the foregoing likewise hold true for the system in accordance with the invention.

A friction between the projection and the component may be greater than the friction between the projection and the base. In this way one can enhance the interaction between the projection, the recess and the component to be stored in the retainer to ensure the component maintains its position within the retainer over time.

Further embodiments of the invention are described in the following description of the Figures. The invention will be explained in the following in detail by means of embodiments and with reference to the drawing in which is shown:
- Fig. 1: a perspective schematic view of a retainer in an open position;
- Fig. 2: a perspective schematic view of the retainer of Fig. 1 in a locked position;
- Fig. 3: a perspective schematic side view of the retainer of Fig. 1 in a locked position with a component arranged therein;
- Fig. 4: a perspective schematic view of the retainer of Fig. 3 in the locked position with a component arranged therein;
- Fig. 5: a top view of the retainer of Fig. 4 with a cover removed;
- Fig. 6a & 6b: schematic views explaining the self-locking functional concept of the retainer; and
- Fig. 7a & 7b: further schematic views showing the self-locking functional concept of the retainer.

In the following, the same reference numerals will be used for parts having the same or equivalent function. Any statements made having regard to the direction of a component are made relative to the position shown in the drawing and can naturally vary in the actual position of application.

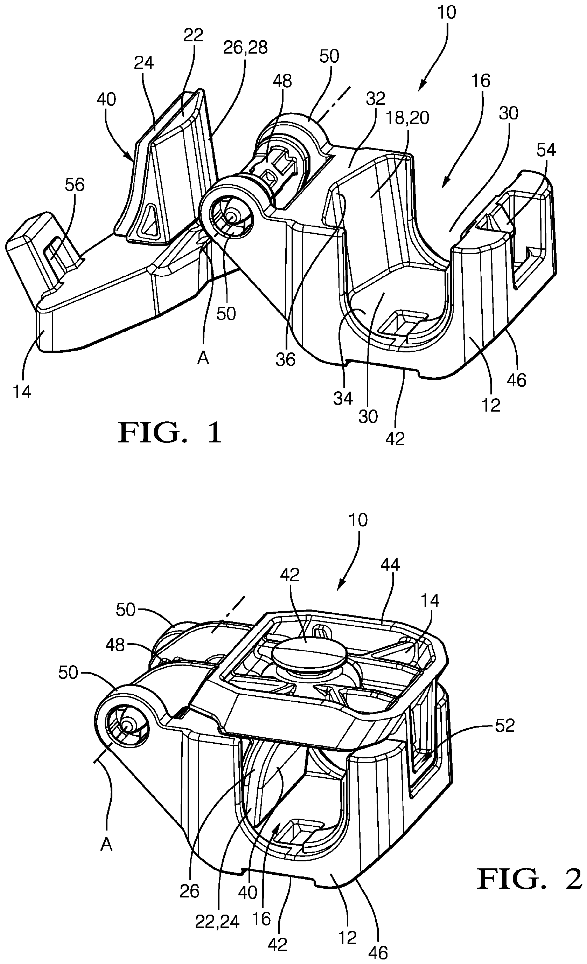

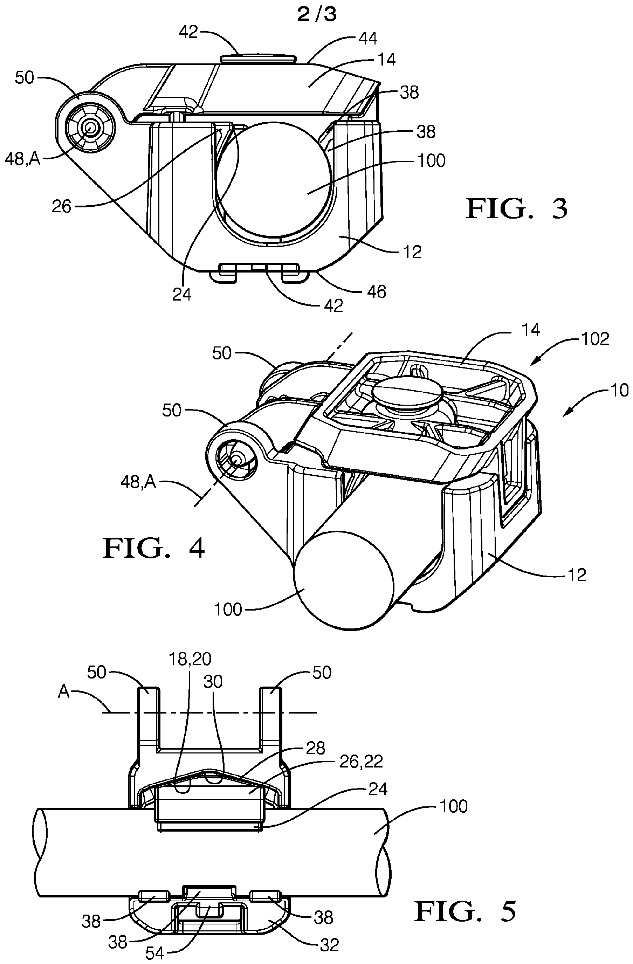

Fig. 1 shows a perspective schematic view of a retainer 10 in an open position, i.e. a state in which the retainer 10 is delivered to a customer. The retainer 10 comprises a base 12 and a cover 14 that can be moved relative to the base 12 between the open position and a locked position, i.e. an assembly state of the retainer 10. A reception space 16 for components 100 (see Fig. 3) is formed between the base 12 and the cover 14 in the locked position.

In order to move the retainer between the open position and the locked position, the cover 14 is pivotable about a pivot axis A relative to the base 12 between the open position and the locked position. For this purpose the cover 14 comprises an axle 48 that is received in two sleeves 50 arranged at the base 12.

The base 12 comprises a recess 18 at an inner sidewall 20 of the base 12 and the cover 14 comprises a projection 22 that is received in the recess 18 in the locked position (see e.g. Fig. 2), with part of the projection 22 forming part of the reception space 16 in the locked position. The projection 22 is configured to be moveable in the recess 18 in the locked position.

The projection 22 is of two-part design with a material of the first part 24 being softer than a material of the second part 26. By forming the material of the first part 24 softer than the material of the second part 26 one can facilitate that the friction µₛ between the projection 22 and the component 100 to be stored in the retainer 10 is greater than the friction µ_{H} between the projection 22 and the base 12.

For this purpose the first part 24, i.e. the softer part, is configured to contact the component 100 in the locked position and the second part 26, i.e. the harder part, is configured to contact the recess 18 in the locked position.

The recess 18 extends from a top side 32 to a bottom side 34 of the base 12. A valley 36 of the recess 18 is inclined with respect to the bottom side 34 of the base 12. An angle of inclination of the valley 36 is typically selected in the range of 95° to 125° and in the present embodiment amounts to 105°.

The base 12 comprises two openings 30 at opposing sides, with the openings 30 having a U-shaped shape in the embodiment shown. It should be noted that the openings 30 could also have a V-shaped shape. As indicated in Fig. 3, the component 100, such as a pipe is guided through each of the openings 30.

Both the cover 14 and the base 12 of the retainer 10 comprise a respective connector portion 42 via which the retainer can be coupled to a further component, such as the chassis of a vehicle (not shown). As indicated in Fig. 1 the connector portion 42 provided at the base is arranged at an outer side 46 of the base 12. As indicated in Fig. 2, the connector portion 42 provided at the cover 14 is arranged at an outer side 44 of the cover 14.

It should be noted that only one connector portion 42 or more than two connector portions 42 may be provided at the retainer 10 and that the position of the connector portion(s) 42 may vary in comparison to the ones shown in the Figures.

The cover 14 can be locked to the base 12 by means of a snap fit connection 52 (see Fig. 2 showing the assembled snap fit connection 52). For this purpose the base 12 comprises a nose 54 cooperating with a recess 56 provided at the cover 14.

Fig. 2 shows a perspective schematic view of the retainer 10 of Fig. 1 in a locked position. The second part 26 of the projection 22, like the projection 22 is configured to be moveable relative to the sidewall 20 in the recess 18 in the locked position. The reason for this will be explained in the following.

As also indicated in Fig. 2, the projection 22 has two planar surfaces 40 arranged at the first part 24 disposed opposite to the second part. The planar surfaces 40 project into the reception space 16 in the locked position. The component 100 to be stored in the reception space 16 can be clamped into position by means of the interaction of the planar surfaces 40 and the base 12.

Fig. 3 shows a perspective schematic side view of the retainer 10 in the locked position with the component 100 arranged therein. The component is locked in position between the base 12, the cover 14, the projection 22 and lugs 38 (see Fig. 5)

Fig. 4 shows a perspective schematic view of a system 102 having the retainer of Fig. 3 in the locked position with the component 100 arranged therein. The component 100 is retained in a self-locking manner in the reception space 16 by means of an interaction between the component 100, the recess 18 and the projection 22.

Fig. 5 shows a top view of the retainer 10 of Fig. 4 with the cover 14 removed. The second part 26 has a back wall 28 that is configured to contact said recess 18. The back wall 28 is shaped complementary to said sidewall 20.

The back wall 28 has the shape of a wedge that is received in the recess 18. The angle of the wedge shape of the back wall 28 of the projection 22 may be selected in the range of 90° to 175° and in the embodiment illustrated in Fig. 5 amounts to 155°.

The recess 18 has a shape that is one of a U-shaped or V-shaped shape at least in a cross-section in a plane extending in parallel to the bottom side 34. The shape of the recess 18 is selected complementary to the shape of the projection 22. Hence an opening angle of the recess may be selected in the range of 90° to 175° and in the embodiment illustrated in Fig. 5 amounts to 155°.

Three lugs 38 are provided at a side of the base 12 disposed opposite to the recess 18, with the lugs 38 projecting into the reception space 16. The lugs 38 are arranged at the top side 32 and ensure that the component 100 is held in the reception space 16 on assembly of the system 102. The lugs 38 further aid in increasing the contact force between the retainer 10 and the component 100, by fixing the component 100 in the retainer 10.

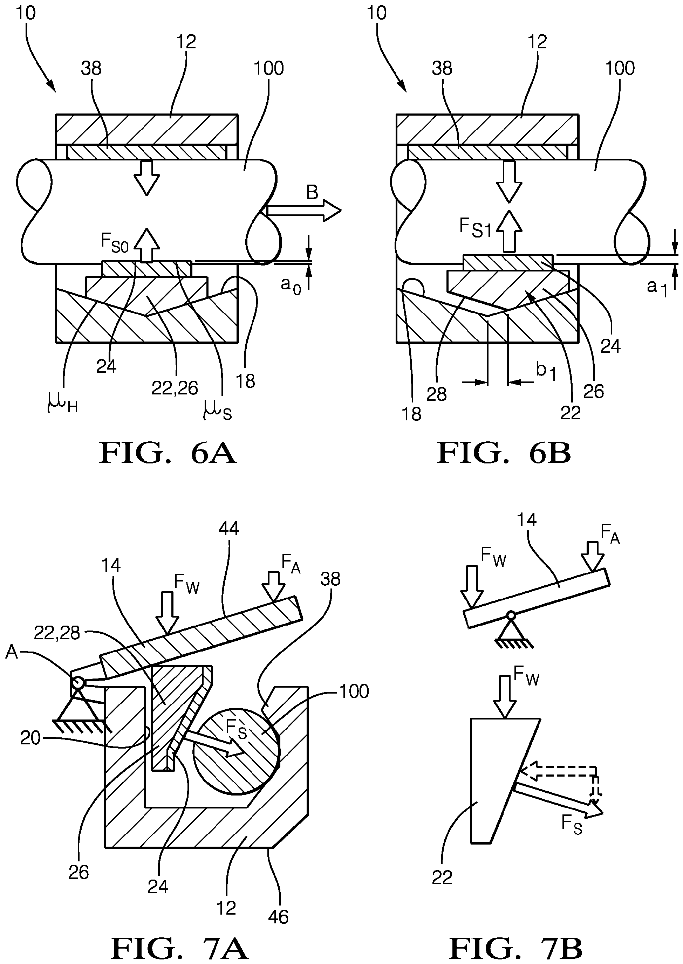

Fig. 6a & 6b show schematic views explaining the self-locking functional concept of the retainer 10. On exerting a force in the direction of the arrow B on the component 100 stored in the retainer 10 the line movement results in a translation b1 of the projection 22 and increases the interference a (which is equal to the retention force Fs) between the projection 22 and the component 100.

The increase in interference counteracts the translational movement of the component 100 in the direction of the arrow B. This can amongst other things be achieved by the projection 22 interacting with the recess 18 and can be further enhanced by ensuring that the friction µₛ between the projection 22 and the component 100 is greater than the friction µ_{H} between the projection 22 and the base 12.

In this way a relaxation and or aging of the material of the component 100 and of the projection 22 can be compensated, as can geometrical deviations of the components 100, particularly if these are formed as wires, cables, cable harnesses, ducts, hoses, and/or pipes.

Fig. 7a & 7b show further schematic views showing the self-locking functional concept of the retainer 10. This is based on canter leaver effects that are achievable by means of the cover 14 being pivotable relative to the base 12 and the clamping effect exerted thereby on the component 100.

As indicated in Fig. 7a the cover 14 exerts a downwards force on the projection 22 which causes the projection 22 to wedge itself between the sidewall 20 and the component 100 thereby increasing the contact force Fₛ on the component 100 as indicated in Fig. 7b.

The assembly force F_{A} in combination with the position of the projection 22 leads to a leverage effect and increases the force Fw of the projection 22 on the component 100. The angle of the wedge shape of the back wall 28 of the projection 22 leads to a further multiplication of the force and results in a high contact force on the line Fs.

By means of the increase in force a low assembly force becomes possible such that no tools are required to assemble the system 102. Moreover a high contact force is achieved which leads to a high retention force exerted on the component 100.

### List of reference numerals:

- 10: retainer
- 12: base
- 14: cover
- 16: reception space
- 18: recess
- 20: sidewall
- 22: projection
- 24: first part of 22
- 26: second part of 22
- 28: back wall of 22
- 30: opening
- 32: top side of 12
- 34: bottom side of 12
- 36: valley
- 38: lug
- 40: planar surface of 22
- 42: connector portion
- 44: outer side
- 46: outer side
- 48: axle
- 50: sleeve
- 52: snap fit connection
- 54: nose
- 56: recess

- 100: component
- 102: system

- A: pivot axis
- B: direction of movement

## Claims

1. A retainer (10), in particular a self-locking retainer (10), the retainer (10) comprising a base (12) and a cover (14) that can be moved relative to the base (12) between an open position and a locked position, with a reception space (16) for one or more components (100) being formed between the base (12) and the cover (14) in the locked position, wherein the base (12) comprises a recess (18) at an inner sidewall (20) of the base (12) and the cover (14) comprises a projection (22) that is received in the recess (18) in the locked position, wherein part of the projection (22) forms part of the reception space (16) in the locked position and wherein the projection (22) is configured to be moveable in the recess (18) in the locked position.

2. A retainer (10) in accordance with claim 1, wherein the projection (22) is of two-part design with a material of the first part (24) being softer than a material of the second part (26).

3. A retainer (10) in accordance with claim 2, wherein the first part (24) is configured to contact the component (100) in the locked position and the second part (26) is configured to contact the recess (18) in the locked position.

4. A retainer (10) in accordance with claim 2 or claim 3, wherein the second part (26) has a back wall (28) that is configured to contact said recess (18) and that is shaped complementary to said sidewall (20).

5. A retainer (10) in accordance with at least one of the preceding claims, wherein the second part (26) is configured to be moveable relative to the sidewall (20) in the recess (18) in the locked position.

6. A retainer (10) in accordance with at least one of the preceding claims, wherein the projection has one or more planar surfaces (40) that project into the reception space (16) in the locked position.

7. A retainer (10) in accordance with at least one of the preceding claims, wherein the base (12) comprises two openings (30) at opposing sides, preferably wherein the openings (30) have a U-shaped or V-shaped cross-section.

8. A retainer (10) in accordance with at least one of the preceding claims, wherein the recess (18) extends from a top side (32) to a bottom side (34) of the base (12).

9. A retainer (10) in accordance with claim 8, wherein a valley (36) of the recess (18) is inclined with respect to the bottom side (34) of the base (12).

10. A retainer (10) in accordance with claim 7 or claim 8, wherein the recess (18) has one of a U-shaped or V-shaped shape at least in a cross-section in a plane extending in parallel to the bottom side (34).

11. A retainer (10) in accordance with at least one of the preceding claims, preferably in accordance with one of claims 8 to 10, wherein one or more lugs (38) are provided at a side of the base (12) disposed opposite to the recess (18), with the lugs (38) projecting into the reception space (16), preferably with the lugs (38) being arranged at the top side (32).

12. A retainer (10) in accordance with at least one of the preceding claims, wherein at least one of the cover (14) and the base (12) is configured to be coupled to a further component, preferably wherein at least one of the base (12) and the cover (14) comprises a connector portion (42) at an outer side (44, 46) thereof.

13. A retainer (10) in accordance with at least one of the preceding claims, wherein the cover (14) is pivotable about a pivot axis (A) relative to the base (12) between the open position and the locked position, preferably wherein one of the cover (14) and the base (12) comprises an axle (48) that is received in one or more sleeves (50) arranged at the other one of the cover (14) and the base (12).

14. A retainer (10) in accordance with at least one of the preceding claims, wherein the cover (14) is locked at the base (12) by means of a snap fit connection (52), with one of the base (12) and the cover (14) comprising a nose (54) cooperating with a recess (56) provided at the other one of the base (12) and the cover (14).

15. A system comprising a retainer (10) in accordance with at least one of the preceding claims and a component (100) received in the reception space (16) of the retainer (10), wherein the component (100) is e.g. one of a wire, a cable, a cable harness, a duct, a hose, and a pipe, wherein the component (100) is retained in a self-locking manner in the reception space (16) by means of an interaction between the component (100), the recess (18) and the projection (22), preferably wherein a friction (µₛ) between the projection (22) and the component (100) is greater than the friction (µ_{H}) between the projection (22) and the base (12).
